# EUROPEAN PATENT APPLICATION

(11) **EP 4 520 466 A1**
(43) Date of publication of application: **12.03.2025**
(21) Application number: 23899531.0
(22) Date of filing: 15.09.2023
(51) Int. Cl.: B23D 31/00, B23D 33/00, B23Q 17/20, H01M 4/04

(54) **ELECTRODE SHEET FORMING DEVICE**

(30) Priority: 07.12.2022 CN 202223266254 U
(71) Applicant: Contemporary Amperex Technology (Hong Kong) Limited, Hong Kong (HK)
(72) Inventor: GUO, Yitai, Ningde, Fujian 352100 (CN); WANG, Zhihui, Ningde, Fujian 352100 (CN); LIN, Wu, Ningde, Fujian 352100 (CN)
(74) Representative: Kraus & Lederer PartGmbB
(86) International application number: PCT/CN2023/119157
(87) International publication number: WO 2024/119948

(57) **Abstract**

An electrode plate molding device (10) is disclosed, including a conveying mechanism (11), a cutting mechanism (12), a first detection mechanism (13), and a deviation rectification mechanism (14). The conveying mechanism (11) is configured to convey an electrode plate strip (20). The cutting mechanism (12) is arranged downstream of the conveying mechanism (11) along a conveying direction of the electrode plate strip (20). The cutting mechanism (12) is configured to cut the electrode plate strip (20) to form an electrode plate. The first detection mechanism (13) is located upstream of the cutting mechanism (12) along the conveying direction. The first detection mechanism (13) is configured to detect a location of the electrode plate strip (20) along a width direction of the electrode plate strip. The deviation rectification mechanism (14) adjusts relative locations of the electrode plate strip (20) and the cutting mechanism (12) along the width direction in response to a detection result of the first detection mechanism (13).

## Description

### CROSS-REFERENCE TO RELATED APPLICATIONS

This application claims priority to Chinese Patent Application No. 2022232662547, filed on December 7, 2022 and entitled "ELECTRODE PLATE MOLDING DEVICE", which is incorporated herein by reference in its entirety.

### TECHNICAL FIELD

This application relates to the field of batteries, and specifically, to an electrode plate molding device.

### BACKGROUND

Batteries are widely used in the field of new energy, such as electric vehicles and new energy vehicles. New energy vehicles and electric vehicles have become a new trend of development in the automobile industry. An electrode assembly of a battery cell is mainly formed by winding or stacking a positive electrode plate and a negative electrode plate. Quality of the electrode plates greatly affects performance of the battery cell. However, currently, a yield rate of electrode plates is low.

### SUMMARY

Embodiments of this application are intended to provide an electrode plate molding device, to resolve a problem in the related art that a yield rate of electrode plates is low.

An embodiment of this application provides an electrode plate molding device. The electrode plate molding device includes a conveying mechanism, a cutting mechanism, a first detection mechanism, and a deviation rectification mechanism. The conveying mechanism is configured to convey an electrode plate strip. The cutting mechanism is arranged downstream of the conveying mechanism along a conveying direction of the electrode plate strip, and the cutting mechanism is configured to cut the electrode plate strip to form an electrode plate. The first detection mechanism is located upstream of the cutting mechanism along the conveying direction, and the first detection mechanism is configured to detect a location of the electrode plate strip along a width direction of the electrode plate strip. The deviation rectification mechanism adjusts relative locations of the electrode plate strip and the cutting mechanism along the width direction in response to a detection result of the first detection mechanism.

In the foregoing technical solution, the conveying mechanism can convey the electrode plate strip to the cutting mechanism, and the cutting mechanism can cut the electrode plate strip to form the electrode plate. The electrode plate molding device is provided with the first detection mechanism and the deviation rectification mechanism. The first detection mechanism can detect the location of the electrode plate strip along the width direction to determine whether the electrode plate strip deviates. When the electrode plate strip deviates, the deviation rectification mechanism can adjust the relative locations of the electrode plate strip and the cutting mechanism along the width direction, so that the cutting mechanism can accurately cut the electrode plate strip to increase a yield rate of the electrode plate.

In an optional technical solution of this embodiment of this application, the deviation rectification mechanism is connected to the conveying mechanism, and the deviation rectification mechanism is configured to adjust a location of the conveying mechanism along the width direction to adjust the relative locations of the electrode plate strip and the cutting mechanism along the width direction.

In the foregoing technical solution, because the conveying mechanism can convey the electrode plate strip, when the location of the conveying mechanism along the width direction is adjusted, the electrode plate strip on the conveying mechanism also moves along with the conveying mechanism. In this way, a location of the electrode plate strip along the width direction is changed, and a deviation of the electrode plate strip is rectified, so that the cutting mechanism accurately cuts the electrode plate strip. This helps increase a yield rate of the electrode plate.

In an optional technical solution of this embodiment of this application, the conveying mechanism includes a driving roller and a first mounting bracket, where the driving roller is rotatably connected to the first mounting bracket, and the driving roller is configured to convey the electrode plate strip; and the deviation rectification mechanism includes a first drive assembly and a second mounting bracket, where the first mounting bracket is movably arranged on the second mounting bracket along the width direction, the first drive assembly is mounted on the second mounting bracket, the first drive assembly is connected to the first mounting bracket, and the first drive assembly is configured to drive the first mounting bracket to move relative to the second mounting bracket along the width direction.

In the foregoing technical solution, the driving roller can convey the electrode plate strip, the driving roller is mounted on the first mounting bracket, and the first mounting bracket is movably arranged on the second mounting bracket along the width direction. The first drive assembly can drive the first mounting bracket to move relative to the second mounting bracket along the width direction, so that a location of the driving roller along the width direction is adjusted, and the electrode plate strip moves along with the driving roller to rectify a deviation.

In an optional technical solution of this embodiment of this application, the conveying mechanism includes a driven roller, the driven roller is rotatably connected to the first mounting bracket, the driven roller and the driving roller are respectively located on two sides along a thickness direction of the electrode plate strip, and the driven roller and the driving roller are configured to convey the electrode plate strip in cooperation.

In the foregoing technical solution, the driven roller and the driving roller are arranged to convey the electrode plate strip in cooperation, so that stability of conveying of the electrode plate strip is improved. This helps accurately convey the electrode plate strip to the cutting mechanism, and increases a yield rate of the electrode plate.

In an optional technical solution of this embodiment of this application, the conveying mechanism includes a pressure adjustment mechanism, the pressure adjustment mechanism is connected to the driven roller, and the pressure adjustment mechanism is configured to adjust pressure applied by the driven roller to the electrode plate strip.

In the foregoing technical solution, during conveying of different electrode plate strips, the driven roller applies different pressure to the electrode plate strips. If pressure applied by the driven roller to the electrode plate strip is insufficient, the electrode plate strip cannot be stably conveyed. If the driven roller applies excessively large pressure to the electrode plate strip, the electrode plate strip may be crushed. Therefore, the pressure adjustment mechanism is arranged to adjust pressure applied by the driven roller to the electrode plate strip. This helps improve adaptability of the electrode plate molding device to different electrode plate strips.

In an optional technical solution of this embodiment of this application, the deviation rectification mechanism is connected to the cutting mechanism, and the deviation rectification mechanism is configured to adjust a location of the cutting mechanism along the width direction to adjust the relative locations of the electrode plate strip and the cutting mechanism along the width direction.

In the foregoing technical solution, when the electrode plate strip deviates, the deviation rectification mechanism also correspondingly adjusts the location of the cutting mechanism along the width direction, so that relative locations of the cutting mechanism and the electrode plate strip along the width direction after the adjustment are the same as relative locations of the cutting mechanism and the electrode plate strip before the electrode plate strip deviates. This can also ensure that the cutting mechanism accurately cuts the electrode plate strip, thereby rectifying the deviation.

In an optional technical solution of this embodiment of this application, the cutting mechanism includes a cutting assembly and a third mounting bracket, where the cutting assembly is connected to the third mounting bracket; and the deviation rectification mechanism includes a second drive assembly and a second mounting bracket, where the third mounting bracket is movably arranged on the second mounting bracket along the width direction, the second drive assembly is mounted on the second mounting bracket, the second drive assembly is connected to the third mounting bracket, and the second drive assembly is configured to drive the third mounting bracket to move relative to the second mounting bracket along the width direction.

In the foregoing technical solution, the cutting assembly can cut the electrode plate strip, the cutting assembly is mounted on the third mounting bracket, and the third mounting bracket is movably arranged on the second mounting bracket along the width direction. The second drive assembly can drive the third mounting bracket to move relative to the second mounting bracket along the width direction. In this way, a location of the cutting assembly along the width direction is adjusted, so that relative locations of the cutting mechanism and the electrode plate strip along the width direction after the adjustment are the same as relative locations of the cutting mechanism and the electrode plate strip before the electrode plate strip deviates, thereby rectifying the deviation.

In an optional technical solution of this embodiment of this application, the first detection mechanism includes a first laser transmitter and a first laser receiver, the first laser transmitter is configured to transmit laser light, the first laser receiver is configured to receive laser light, the first laser transmitter and the first laser receiver are respectively located on two sides of the electrode plate strip along the thickness direction of the electrode plate strip, the first laser receiver is configured to generate a deviation rectification signal when no laser light transmitted by the first laser transmitter is received, and the deviation rectification mechanism adjusts the relative locations of the electrode plate strip and the cutting mechanism along the width direction in response to the deviation rectification signal.

In the foregoing technical solution, when the electrode plate strip does not deviate, the electrode plate strip does not block the first laser receiver. In this case, laser light transmitted by the first laser transmitter can be received by the first laser receiver. When the electrode plate strip deviates, the electrode plate strip blocks the first laser receiver. In this case, laser light transmitted by the first laser transmitter cannot be received by the first laser receiver, the first laser receiver generates a deviation rectification signal, and the deviation rectification mechanism adjusts the relative locations of the electrode plate strip and the cutting mechanism along the width direction based on the deviation rectification signal to rectify the deviation.

In an optional technical solution of this embodiment of this application, the electrode plate molding device further includes a second detection mechanism, the second detection mechanism is located upstream of the cutting mechanism along the conveying direction, the second detection mechanism is configured to detect a location of a tab of the electrode plate strip, and the cutting mechanism cuts the electrode plate strip in response to a detection result of the second detection mechanism.

In the foregoing technical solution, the second detection mechanism is arranged to detect the location of the tab of the electrode plate strip, and a location for cutting may be obtained based on the location of the tab of the electrode plate strip. In this way, the cutting mechanism can cut the electrode plate strip when the electrode plate strip is in place, to improve accuracy of cutting the electrode plate strip and increase a yield rate of the electrode plate.

In an optional technical solution of this embodiment of this application, the second detection mechanism includes a second laser transmitter and a second laser receiver, the second laser transmitter is configured to transmit laser light, the second laser receiver is configured to receive laser light, the second laser transmitter and the second laser receiver are respectively located on two sides of the electrode plate strip along the thickness direction of the electrode plate strip, the second laser receiver is configured to generate an in-place signal when no laser light transmitted by the second laser transmitter is received, and the cutting mechanism cuts the electrode plate strip in response to the in-place signal.

In the foregoing technical solution, during conveying of the electrode plate strip, a plurality of tabs of the electrode plate strip sequentially pass through the second detection mechanism. Along the conveying direction, when the second detection mechanism is located between two adjacent tabs, laser light transmitted by the second laser transmitter can be received by the second laser receiver. However, when a tab blocks the second laser receiver, laser light transmitted by the second laser transmitter cannot be received by the second laser receiver, the second laser receiver generates an in-place signal, and the cutting mechanism cuts the electrode plate strip.

In an optional technical solution of this embodiment of this application, the electrode plate molding device further includes a roller and a smoothing component, the roller and the smoothing component are located upstream of the conveying mechanism along the conveying direction, the roller and the smoothing component are located on two sides of the electrode plate strip along the thickness direction of the electrode plate strip, and the smoothing component is configured to smooth the electrode plate strip.

In the foregoing technical solution, the roller and the smoothing component are arranged, so that the electrode plate strip is smoothed by the smoothing component when passing between the roller and the smoothing component. This reduces a risk of folding or wrinkling of the electrode plate strip during conveying.

In an optional technical solution of this embodiment of this application, along the thickness direction, the smoothing component has a first arc surface facing the roller, and along the conveying direction, a gap between the first arc surface and a peripheral surface of the roller in the thickness direction gradually decreases.

In the foregoing technical solution, the smoothing component is provided with the first arc surface, so that good smoothing effect is achieved for the electrode plate strip, and a risk of scratching the electrode plate strip is reduced. Along the conveying direction, the gap between the first arc surface and the peripheral surface of the roller in the thickness direction gradually decreases, so that the electrode plate strip is gradually smoothed when passing between the smoothing component and the roller, with better smoothing effect.

In an optional technical solution of this embodiment of this application, the cutting mechanism includes a cutter and a drive unit, the drive unit is connected to the cutter, and the drive unit is configured to drive the cutter to move along the thickness direction of the electrode plate strip to cut the electrode plate strip.

In the foregoing technical solution, the drive unit can drive the cutter to move close to or away from the electrode plate strip, to cut the electrode plate strip. This is simple and convenient.

In an optional technical solution of this embodiment of this application, the cutter has a cutting surface, the cutting surface includes a first flat surface and a second arc surface, the second arc surface is connected to an end of the first flat surface along the width direction, and the second arc surface is used for forming a round corner on the electrode plate through cutting.

In the foregoing technical solution, the first flat surface is arranged to cut the electrode plate strip to form the electrode plate, and the second arc surface is arranged to form the round corner on the electrode plate through cutting. This reduces a risk that an edge or a corner pierces a separator during winding or stacking of electrode plates, and helps enhance safety of a battery cell.

In an optional technical solution of this embodiment of this application, the cutting surface further includes a second flat surface, the second arc surface connects the first flat surface and the second flat surface, and the first flat surface and the second flat surface are arranged at an obtuse angle.

In the foregoing technical solution, the second flat surface is arranged at an end, away from the first flat surface, of the second arc surface, and the second flat surface and the first flat surface are arranged at an obtuse angle, so that a specific deviation of the electrode plate strip can be canceled, and an electrode plate obtained through cutting has no step (if a step appears, a new sharp corner is formed at an outer edge of the electrode plate, and is likely to pierce the separator). This helps increase a yield rate of the electrode plate.

In an optional technical solution of this embodiment of this application, the second arc surface is tangent to the first flat surface and the second flat surface.

In the foregoing technical solution, the second arc surface is tangent to the first flat surface and the second flat surface, so that an edge of an electrode plate obtained through cutting is smoother. This can further reduce a risk that the electrode plate pierces the separator, and helps increase a yield rate of the electrode plate and improve safety of a battery cell.

In an optional technical solution of this embodiment of this application, the cutting surface includes two second arc surfaces and two second flat surfaces, the two second arc surfaces are respectively connected to two ends of the first flat surface along the width direction, and one second flat surface is connected to the first flat surface through one second arc surface.

In the foregoing technical solution, the second arc surfaces are respectively arranged at the two ends of the first flat surface along the width direction, and one second flat surface is correspondingly arranged for one second arc surface, so that one round corner is formed at each of two ends of an electrode plate along the width direction during cutting of the electrode plate strip.

In an optional technical solution of this embodiment of this application, the cutter includes two cutting surfaces, and the two cutting surfaces are located on two sides of the cutter along the conveying direction.

In the foregoing technical solution, the cutting surfaces are formed on both sides of the cutter, so that after the electrode plate strip is cut, round corners can be formed on an electrode plate, and round corners are also formed on the electrode plate strip. In this way, for a next electrode plate obtained through cutting, round corners are formed at both ends of the electrode plate along the conveying direction.

### BRIEF DESCRIPTION OF DRAWINGS

To describe the technical solutions in the embodiments of this application more clearly, the following briefly describes the accompanying drawings required for describing the embodiments. It should be understood that the following accompanying drawings show only some embodiments of this application, and therefore should not be considered as a limitation on the scope. Persons of ordinary skill in the art may still derive other related drawings from the accompanying drawings without creative efforts.
FIG. 1 is a schematic structural diagram of an electrode plate molding device according to some embodiments of this application;
FIG. 2 is a schematic structural diagram of a conveying mechanism and a deviation rectification mechanism according to some embodiments of this application;
FIG. 3 is a schematic structural diagram of a pressure adjustment mechanism according to some embodiments of this application;
FIG. 4 is a schematic block diagram of a first detection mechanism according to some embodiments of this application;
FIG. 5 is a schematic block diagram of a second detection mechanism according to some embodiments of this application;
FIG. 6 is a schematic structural diagram of a first detection mechanism and a second detection mechanism according to some embodiments of this application;
FIG. 7 is a schematic structural diagram of a roller and a smoothing component according to some embodiments of this application;
FIG. 8 is a schematic structural diagram of a cutting mechanism according to some embodiments of this application;
FIG. 9 is a schematic diagram of cutting by a cutter when an electrode plate strip deviates in the conventional technology;
FIG. 10 shows an electrode plate strip obtained through cutting by a cutter when an electrode plate strip deviates in the conventional technology;
FIG. 11 is a schematic structural diagram of a cutter according to some embodiments of this application;
FIG. 12 is an enlarged view of a location D in FIG. 11;
FIG. 13 is a schematic diagram of cutting by a cutter when an electrode plate deviates according to some embodiments of this application; and
FIG. 14 shows an electrode plate obtained through cutting by a cutter when an electrode plate deviates according to some embodiments of this application.

Reference signs: 10: electrode plate molding device; 11: conveying mechanism; 111: driving roller; 112: first mounting bracket; 113: driven roller; 114: pressure adjustment mechanism; 1141: third drive component; 1142: fourth mounting bracket; 1121: second sliding rail; 115: driving wheel; 116: driven wheel; 117: drive belt; 118: first drive component; 12: cutting mechanism; 121: upper mold; 1211: cutter; 12111: first flat surface; 12112: second arc surface; 12113: second flat surface; 122: lower mold; 123: eighth mounting bracket; 124: support rod; 125: mounting plate; 126: fixture block; 127: second connector; 128: fourth drive component; 129: drive wheel; 13: first detection mechanism; 131: first bracket; 132: fifth mounting bracket; 1321: first mounting portion; 1322: second mounting portion; 1323: third mounting portion; 133: first laser transmitter; 134: first laser receiver; 14: deviation rectification mechanism; 141: first drive assembly; 1411: second drive component; 1412: screw; 1413: first connector; 142: second mounting bracket; 1421: first sliding rail; 15: second detection mechanism; 151: second bracket; 152: sixth mounting bracket; 1521: fourth mounting portion; 1522: fifth mounting portion; 1523: sixth mounting portion; 153: second laser transmitter; 154: second laser receiver; 16: roller; 161: roller body; 162: rotating shaft; 17: smoothing component; 171: first arc surface; 172: connecting rod; 173: seventh mounting bracket; 174: third arc surface; 18: waste collection box; 19: rack; 20: electrode plate strip; and 21: step.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are merely intended to describe the specific embodiments rather than to limit this application. The terms "include", "comprise", and any variations thereof in the specification and claims of this application as well as the foregoing description of the drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The term appearing in various locations in this specification does not necessarily mean a same embodiment, and neither means an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, a battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, rectangular, or in another shape. This is not limited in the embodiments of this application either. Battery cells are usually classified into three types based on a packaging method: a cylindrical battery cell, a prismatic battery cell, and a pouch battery cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. The battery usually includes a box for packaging one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Operation of the battery cell mainly relies on migration of metal ions between the positive electrode plate and the negative electrode plate. The positive electrode plate includes a positive-electrode current collector and a positive-electrode active material layer. The positive-electrode active material layer is applied to a surface of the positive-electrode current collector. A part of positive-electrode current collector uncoated with the positive-electrode active material layer protrudes out of a part of positive-electrode current collector coated with the positive-electrode active material layer, and the part of positive-electrode current collector uncoated with the positive-electrode active material layer serves as a positive electrode tab. A lithium-ion battery is used as an example. The positive-electrode current collector may be made of aluminum, and the positive-electrode active material may be lithium cobaltate, lithium iron phosphate, ternary lithium, lithium manganate, or the like. The negative electrode plate includes a negative-electrode current collector and a negative-electrode active material layer. The negative-electrode active material layer is applied to a surface of the negative-electrode current collector. A part of negative-electrode current collector uncoated with the negative-electrode active material layer protrudes out of a part of negative-electrode current collector coated with the negative-electrode active material layer, and the part of negative-electrode current collector uncoated with the negative-electrode active material layer serves as a negative electrode tab. The negative-electrode current collector may be made of copper, and the negative-electrode active material may be carbon, silicon, or the like. To allow a large current to pass through without any fusing, a plurality of positive electrode tabs are provided and stacked, and a plurality of negative electrode tabs are provided and stacked. The separator may be made of PP (polypropylene, polypropylene), PE (polyethylene, polyethylene), or the like. In addition, the electrode assembly may have a winding structure or a laminated structure. This embodiment of this application is not limited thereto.

Currently, from the perspective of market development, batteries are increasingly widely used. Batteries have been not only used in energy storage power systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of batteries, a market demand for batteries also continuously grows.

An electrode assembly of a battery cell is mainly formed by winding or stacking a positive electrode plate and a negative electrode plate. Quality of the electrode plates greatly affects performance of the battery cell. However, currently, a yield rate of electrode plates is low.

The inventors have found through research that an electrode plate in the conventional technology is formed by cutting an electrode plate strip; however, the electrode plate strip may deviate during conveying of the electrode plate strip, causing a low yield rate of an electrode plate obtained through cutting.

Based on the foregoing considerations, the inventors have designed an electrode plate molding device through in-depth research. The electrode plate molding device includes a conveying mechanism, a cutting mechanism, a first detection mechanism, and a deviation rectification mechanism. The conveying mechanism is configured to convey an electrode plate strip. The cutting mechanism is arranged downstream of the conveying mechanism along a conveying direction of the electrode plate strip, and the cutting mechanism is configured to cut the electrode plate strip to form an electrode plate. The first detection mechanism is located upstream of the cutting mechanism along the conveying direction, and the first detection mechanism is configured to detect a location of the electrode plate strip along a width direction of the electrode plate strip. The deviation rectification mechanism adjusts relative locations of the electrode plate strip and the cutting mechanism along the width direction in response to a detection result of the first detection mechanism.

The conveying mechanism can convey the electrode plate strip to the cutting mechanism, and the cutting mechanism can cut the electrode plate strip to form the electrode plate. The electrode plate molding device is provided with the first detection mechanism and the deviation rectification mechanism. The first detection mechanism can detect the location of the electrode plate strip along the width direction to determine whether the electrode plate strip deviates. When the electrode plate strip deviates, the deviation rectification mechanism can adjust the relative locations of the electrode plate strip and the cutting mechanism along the width direction, so that the cutting mechanism can accurately cut the electrode plate strip to increase a yield rate of the electrode plate.

The technical solutions described in the embodiments of this application are applicable to molding of an electrode plate.

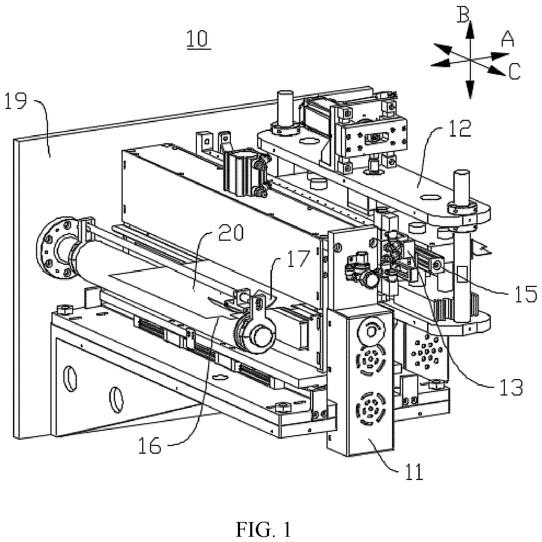

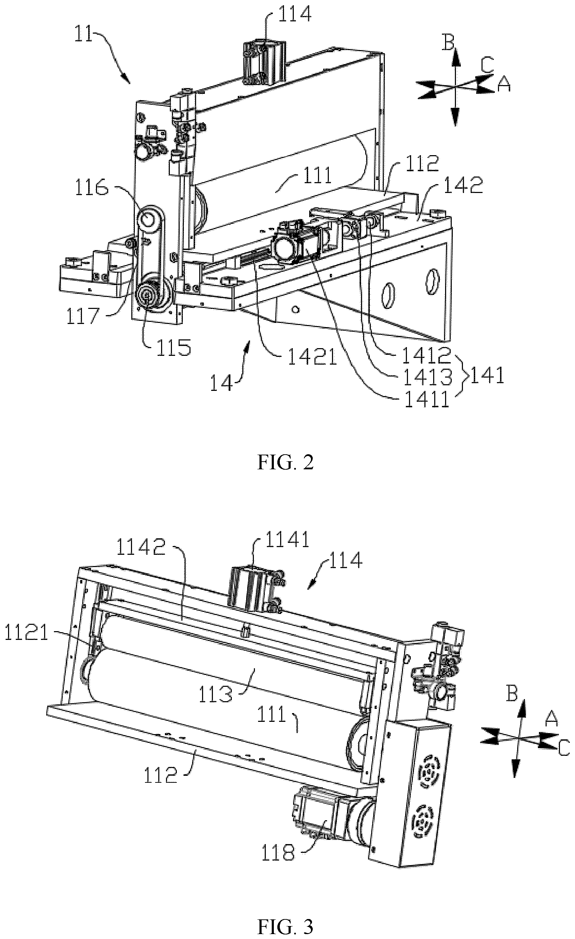

Refer to FIG. 1 and FIG. 2. FIG. 1 is a schematic structural diagram of an electrode plate molding device 10 according to some embodiments of this application. FIG. 2 is a schematic structural diagram of a conveying mechanism 11 and a deviation rectification mechanism 14 according to some embodiments of this application. An embodiment of this application provides an electrode plate molding device 10. The electrode plate molding device 10 includes a conveying mechanism 11, a cutting mechanism 12, a first detection mechanism 13, and a deviation rectification mechanism 14. The conveying mechanism 11 is configured to convey an electrode plate strip 20. The cutting mechanism 12 is arranged downstream of the conveying mechanism 11 along a conveying direction of the electrode plate strip 20, and the cutting mechanism 12 is configured to cut the electrode plate strip 20 to form an electrode plate. The first detection mechanism 13 is located upstream of the cutting mechanism 12 along the conveying direction, and the first detection mechanism 13 is configured to detect a location of the electrode plate strip 20 along a width direction of the electrode plate strip 20. The deviation rectification mechanism 14 adjusts relative locations of the electrode plate strip 20 and the cutting mechanism 12 along the width direction in response to a detection result of the first detection mechanism 13.

The conveying mechanism 11 is a mechanism for conveying the electrode plate strip 20. For example, the conveying mechanism 11 may include a conveying roller, the electrode plate strip 20 is partially wound around the conveying roller, and the electrode plate strip 20 moves along with rotation of the conveying roller.

It should be noted that the conveying direction of the electrode plate strip 20 is a conveying direction of the electrode plate strip 20 during normal conveying (without a deviation). The width direction of the electrode plate strip 20 is a width direction of the electrode plate strip 20 during normal conveying (without a deviation). Refer to FIG. 1. The conveying direction of the electrode plate strip 20 may be a direction A shown in FIG. 1, and the width direction of the electrode plate strip 20 may be a direction C shown in FIG. 1.

The cutting mechanism 12 is a mechanism for cutting the electrode plate strip 20. The cutting mechanism 12 can cut the electrode plate strip 20 conveyed by the conveying mechanism 11 to form the electrode plate.

The first detection mechanism 13 is a mechanism for determining whether the electrode plate strip 20 deviates. The first detection mechanism 13 is arranged upstream of the cutting mechanism 12 to determine whether the electrode plate strip 20 deviates before the cutting mechanism 12 cuts the electrode plate strip 20. For example, the first detection mechanism 13 includes a first camera unit and a first processing unit, and the first camera unit is electrically connected to the first processing unit. The first camera unit is configured to obtain an image of the electrode plate strip 20, and the first processing unit is configured to process the image to obtain the location of the electrode plate strip 20 along the width direction, to determine whether the electrode plate strip 20 deviates.

The deviation rectification mechanism 14 is a mechanism for rectifying a deviation of the electrode plate strip 20. When the first detection mechanism 13 detects that the electrode plate strip 20 deviates, the deviation rectification mechanism 14 adjusts the relative locations of the electrode plate strip 20 and the cutting mechanism 12 along the width direction to rectify the deviation of the electrode plate strip 20.

The conveying mechanism 11 can convey the electrode plate strip 20 to the cutting mechanism 12, and the cutting mechanism 12 can cut the electrode plate strip 20 to form the electrode plate. The electrode plate molding device 10 is provided with the first detection mechanism 13 and the deviation rectification mechanism 14. The first detection mechanism 13 can detect the location of the electrode plate strip 20 along the width direction to determine whether the electrode plate strip 20 deviates. When the electrode plate strip 20 deviates, the deviation rectification mechanism 14 can adjust the relative locations of the electrode plate strip 20 and the cutting mechanism 12 along the width direction, so that the cutting mechanism 12 can accurately cut the electrode plate strip 20 to increase a yield rate of the electrode plate.

Refer to FIG. 1 and FIG. 2. In some embodiments, the deviation rectification mechanism 14 is connected to the conveying mechanism 11, and the deviation rectification mechanism 14 is configured to adjust a location of the conveying mechanism 11 along the width direction to adjust the relative locations of the electrode plate strip 20 and the cutting mechanism 12 along the width direction.

That the deviation rectification mechanism 14 is connected to the conveying mechanism 11 may mean that the deviation rectification mechanism 14 is directly connected to the conveying mechanism 11, or may mean that the deviation rectification mechanism 14 is indirectly connected to the conveying mechanism 11. For example, the deviation rectification mechanism 14 is connected to the conveying mechanism 11 through an intermediate part.

The deviation rectification mechanism 14 can change the location of the conveying mechanism 11 along the width direction. When the location of the conveying mechanism 11 along the width direction changes, the location of the electrode plate strip 20 conveyed by the conveying mechanism 11 along the width direction also changes correspondingly. In this way, the relative locations of the electrode plate strip 20 and the cutting mechanism 12 along the width direction are adjusted.

Because the conveying mechanism 11 can convey the electrode plate strip 20, when the location of the conveying mechanism 11 along the width direction is adjusted, the electrode plate strip 20 on the conveying mechanism 11 also moves along with the conveying mechanism 11. In this way, the location of the electrode plate strip 20 along the width direction is changed, and a deviation of the electrode plate strip 20 is rectified, so that the cutting mechanism 12 accurately cuts the electrode plate strip 20. This helps increase a yield rate of the electrode plate.

Refer to FIG. 1, FIG. 2, and FIG. 3. FIG. 3 is a schematic structural diagram of a pressure adjustment mechanism 114 according to some embodiments of this application. In some embodiments, the conveying mechanism 11 includes a driving roller 111 and a first mounting bracket 112. The driving roller 111 is rotatably connected to the first mounting bracket 112, and the driving roller 111 is configured to convey the electrode plate strip 20. The deviation rectification mechanism 14 includes a first drive assembly 141 and a second mounting bracket 142. The first mounting bracket 112 is movably arranged on the second mounting bracket 142 along the width direction. The first drive assembly 141 is mounted on the second mounting bracket 142, and the first drive assembly 141 is connected to the first mounting bracket 112. The first drive assembly 141 is configured to drive the first mounting bracket 112 to move relative to the second mounting bracket 142 along the width direction.

The first mounting bracket 112 is a support structure for supporting the driving roller 111, and the driving roller 111 is a roller structure that can actively rotate. Optionally, the conveying mechanism 11 further includes a first drive component 118, a driving wheel 115, a driven wheel 116, and a drive belt 117. The first drive component 118 is mounted on the first mounting bracket 112, and the driving wheel 115 and the driven wheel 116 each are rotatably mounted on the first mounting bracket 112. An output end of the first drive component 118 is connected to the driving wheel 115, the driving wheel 115 is connected to the driven wheel 116 through the drive belt 117, and the driven wheel 116 is connected to the driving roller 111. When the first drive component 118 moves, the driving wheel 115 is driven to rotate, the driving wheel 115 drives, through the drive belt 117, the driven wheel 116 to rotate, and the driven wheel 116 finally drives the driving roller 111 to rotate. The electrode plate strip 20 is placed on the driving roller 111, and the electrode plate strip 20 is driven by the driving roller 111 to move.

The second mounting bracket 142 is a support structure for supporting the first mounting bracket 112 and the first drive assembly 141. The second mounting bracket 142 may be mounted on a rack 19 or on the ground.

The first mounting bracket 112 is movably arranged on the second mounting bracket 142 along the width direction, so that the first mounting bracket 112 can move relative to the second mounting bracket 142 along the width direction, to adjust a location of the driving roller 111 along the width direction. Optionally, the second mounting bracket 142 is provided with a first sliding rail 1421, and the first sliding rail 1421 extends along the width direction. The first mounting bracket 112 is provided with a slider that matches the first sliding rail 1421.

The first drive assembly 141 is a structure for driving the first mounting bracket 112 to move relative to the second mounting bracket 142 along the width direction. For example, the first drive assembly 141 includes a second drive component 1411, a screw 1412, and a first connector 1413. The second drive component 1411 is mounted on the second mounting bracket 142, the screw 1412 is rotatably arranged on the second mounting bracket 142, and the screw 1412 extends along the width direction. The first connector 1413 is sleeved on the screw 1412 and is in threaded connection to the screw 1412. The first connector 1413 is fastened to the first mounting bracket 112. When the second drive component 1411 moves, the second drive component 1411 drives the screw to rotate. Because rotation of the first connector 1413 is limited, the first connector 1413 can move only along a length direction of the screw 1412, to drive the first mounting bracket 112 to move relative to the second mounting bracket 142 along the width direction.

The driving roller 111 can convey the electrode plate strip 20, the driving roller 111 is mounted on the first mounting bracket 112, and the first mounting bracket 112 is movably arranged on the second mounting bracket 142 along the width direction. The first drive assembly 141 can drive the first mounting bracket 112 to move relative to the second mounting bracket 142 along the width direction, so that the location of the driving roller 111 along the width direction is adjusted, and the electrode plate strip 20 moves along with the driving roller 111 to rectify a deviation.

Refer to FIG. 1, FIG. 2, and FIG. 3. In some embodiments, the conveying mechanism 11 includes a driven roller 113, and the driven roller 113 is rotatably connected to the first mounting bracket 112. The driven roller 113 and the driving roller 111 are respectively located on two sides along a thickness direction of the electrode plate strip 20, and the driven roller 113 and the driving roller 111 are configured to convey the electrode plate strip 20 in cooperation.

Refer to FIG. 3. The thickness direction of the electrode plate strip 20 may be a direction B shown in FIG. 3.

The driven roller 113 is a roller structure that rotates along with the driving roller 111. The driven roller 113 and the driving roller 111 are arranged with a gap along the thickness direction, and the electrode plate strip 20 passes through the gap between the driven roller 113 and the driving roller 111. Both the driven roller 113 and the driving roller 111 act on the electrode plate strip 20 to convey the electrode plate strip 20 in cooperation.

The driven roller 113 and the driving roller 111 are arranged to convey the electrode plate strip 20 in cooperation, so that stability of conveying of the electrode plate strip 20 is improved. This helps accurately convey the electrode plate strip 20 to the cutting mechanism 12, and increases a yield rate of the electrode plate.

Refer to FIG. 1, FIG. 2, and FIG. 3. In some embodiments, the conveying mechanism 11 includes a pressure adjustment mechanism 114, and the pressure adjustment mechanism 114 is connected to the driven roller 113. The pressure adjustment mechanism 114 is configured to adjust pressure applied by the driven roller 113 to the electrode plate strip 20.

The pressure adjustment mechanism 114 is a mechanism for changing the gap between the driven roller 113 and the driving roller 111 to adjust pressure applied by the driven roller 113 to the electrode plate strip 20.

Optionally, the pressure adjustment mechanism 114 includes a third drive component 1141 and a fourth mounting bracket 1142. The third drive component 1141 is fastened to the first mounting bracket 112. An output end of the third drive component 1141 is connected to the fourth mounting bracket 1142. The fourth mounting bracket 1142 is movably arranged on the first mounting bracket 112 along the thickness direction. For example, the first mounting bracket 112 is provided with a second sliding rail 1121, the second sliding rail 1121 extends along the thickness direction, and sliders that match the second sliding rail 1121 are provided on two sides of the fourth mounting bracket 1142 along the width direction. The driven roller 113 is rotatably mounted on the fourth mounting bracket 1142. Because the fourth mounting bracket 1142 is connected to the first mounting bracket 112, it can be understood that the driven roller 113 is rotatably connected to the first mounting bracket 112 through the fourth mounting bracket 1142. The third drive component 1141 is configured to drive the fourth mounting bracket 1142 to move relative to the first mounting bracket 112 along the thickness direction, to adjust the gap between the driven roller 113 and the driving roller 111, so as to adjust pressure applied by the driven roller 113 to the electrode plate strip 20.

In some embodiments, the fourth mounting bracket 1142 is in a U-shaped structure, and the third drive component 1141 is an air cylinder.

During conveying of different electrode plate strips 20, the driven roller 113 applies different pressure to the electrode plate strips 20. If pressure applied by the driven roller 113 to the electrode plate strip 20 is insufficient, the electrode plate strip 20 cannot be stably conveyed. If the driven roller 113 applies excessively large pressure to the electrode plate strip 20, the electrode plate strip 20 may be crushed. Therefore, the pressure adjustment mechanism 114 is arranged to adjust pressure applied by the driven roller 113 to the electrode plate strip 20. This helps improve adaptability of the electrode plate molding device 10 to different electrode plate strips 20.

In some embodiments, the deviation rectification mechanism 14 is connected to the cutting mechanism 12, and the deviation rectification mechanism 14 is configured to adjust a location of the cutting mechanism 12 along the width direction to adjust the relative locations of the electrode plate strip 20 and the cutting mechanism 12 along the width direction.

That the deviation rectification mechanism 14 is connected to the cutting mechanism 12 may mean that the deviation rectification mechanism 14 is directly connected to the cutting mechanism 12, or may mean that the deviation rectification mechanism 14 is indirectly connected to the cutting mechanism 12. For example, the deviation rectification mechanism 14 is connected to the cutting mechanism 12 through an intermediate part.

When the electrode plate strip 20 deviates, the deviation rectification mechanism 14 also correspondingly adjusts the location of the cutting mechanism 12 along the width direction, so that relative locations of the cutting mechanism 12 and the electrode plate strip 20 along the width direction after the adjustment are the same as relative locations of the cutting mechanism 12 and the electrode plate strip 20 before the electrode plate strip 20 deviates. This can also ensure that the cutting mechanism 12 accurately cuts the electrode plate strip 20, thereby rectifying the deviation.

In some embodiments, the cutting mechanism 12 includes a cutting assembly and a third mounting bracket, and the cutting assembly is connected to the third mounting bracket. The deviation rectification mechanism 14 includes a second drive assembly and a second mounting bracket 142. The third mounting bracket is movably arranged on the second mounting bracket 142 along the width direction. The second drive assembly is mounted on the second mounting bracket 142. The second drive assembly is connected to the third mounting bracket. The second drive assembly is configured to drive the third mounting bracket to move relative to the second mounting bracket 142 along the width direction.

The third mounting bracket is a support structure for supporting the cutting assembly, and the cutting assembly is a component for cutting the electrode plate strip 20. The cutting assembly is movably arranged on the second mounting bracket 142 along the width direction through the third mounting bracket.

The second drive assembly is a structure for driving the third mounting bracket to move relative to the second mounting bracket 142 along the width direction. A structure of the second drive assembly may be the same as that of the first drive assembly 141. The second drive assembly may alternatively be a linear drive component, for example, a linear air cylinder, a linear oil cylinder, or a linear electric cylinder. The second drive assembly may alternatively be a crank slider mechanism.

The cutting assembly can cut the electrode plate strip 20, the cutting assembly is mounted on the third mounting bracket, and the third mounting bracket is movably arranged on the second mounting bracket 142 along the width direction. The second drive assembly can drive the third mounting bracket to move relative to the second mounting bracket 142 along the width direction. In this way, a location of the cutting assembly along the width direction is adjusted, so that relative locations of the cutting mechanism 12 and the electrode plate strip 20 along the width direction after the adjustment are the same as relative locations of the cutting mechanism 12 and the electrode plate strip 20 before the electrode plate strip 20 deviates, thereby rectifying the deviation.

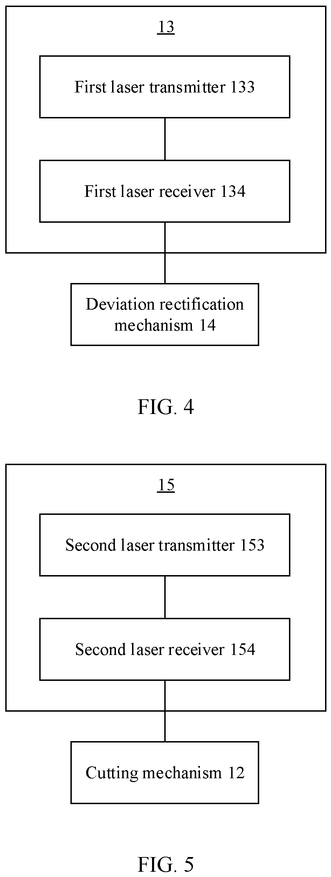

Refer to FIG. 1 and FIG. 4. FIG. 4 is a schematic block diagram of a first detection mechanism 13 according to some embodiments of this application. In some embodiments, the first detection mechanism 13 includes a first laser transmitter 133 and a first laser receiver 134. The first laser transmitter 133 is configured to transmit laser light, and the first laser receiver 134 is configured to receive laser light. The first laser transmitter 133 and the first laser receiver 134 are respectively located on two sides of the electrode plate strip 20 along the thickness direction of the electrode plate strip 20. The first laser receiver 134 is configured to generate a deviation rectification signal when no laser light transmitted by the first laser transmitter 133 is received, and the deviation rectification mechanism 14 adjusts relative locations of the electrode plate strip 20 and the cutting mechanism 12 along the width direction in response to the deviation rectification signal.

The first laser transmitter 133 can transmit laser light, and the first laser receiver 134 can receive laser light. The first laser receiver 134 respectively generates different potentials in a case in which the first laser receiver 134 can receive laser light and in a case in which the first laser receiver 134 cannot receive laser light, and whether the electrode plate strip 20 deviates may be determined based on a potential change.

The first laser transmitter 133 and the first laser receiver 134 are spaced apart along the thickness direction, and the electrode plate strip 20 passes between the first laser transmitter 133 and the first laser receiver 134.

Along the width direction, the electrode plate strip 20 includes a first end with a tab and a second end without a tab. The first laser transmitter 133 and the first laser receiver 134 may be arranged at locations on the electrode plate strip 20 that are close to the second end.

Optionally, the first laser transmitter 133 transmits a laser curtain, and the first laser receiver 134 receives a laser curtain.

When the electrode plate strip 20 does not deviate, the electrode plate strip 20 does not block the first laser receiver 134. In this case, laser light transmitted by the first laser transmitter 133 can be received by the first laser receiver 134. When the electrode plate strip 20 deviates, the electrode plate strip 20 blocks the first laser receiver 134. In this case, laser light transmitted by the first laser transmitter 133 cannot be received by the first laser receiver 134, the first laser receiver 134 generates a deviation rectification signal, and the deviation rectification mechanism 14 adjusts the relative locations of the electrode plate strip 20 and the cutting mechanism 12 along the width direction based on the deviation rectification signal to rectify the deviation.

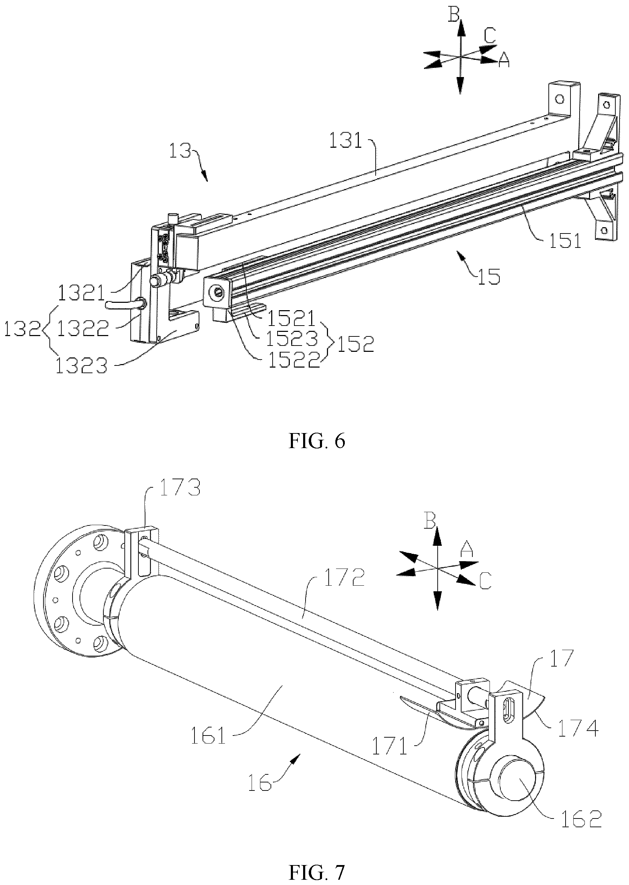

Refer to FIG. 1, FIG. 4, FIG. 5, and FIG. 6. FIG. 5 is a schematic block diagram of a second detection mechanism 15 according to some embodiments of this application. FIG. 6 is a schematic structural diagram of a first detection mechanism 13 and a second detection mechanism 15 according to some embodiments of this application. In some embodiments, the electrode plate molding device 10 further includes a second detection mechanism 15, the second detection mechanism 15 is located upstream of the cutting mechanism 12 along the conveying direction, and the second detection mechanism 15 is configured to detect a location of a tab of the electrode plate strip 20. The cutting mechanism 12 cuts the electrode plate strip 20 in response to a detection result of the second detection mechanism 15.

The second detection mechanism 15 is configured to detect the location of the tab on the electrode plate strip 20 before the cutting mechanism 12 cuts the electrode plate strip 20, and control, based on the location of the tab, the cutting mechanism 12 to cut the electrode plate strip 20.

In some embodiments, the second detection mechanism 15 includes a second camera unit and a second processing unit, and the second camera unit is electrically connected to the second processing unit. The second camera unit is configured to obtain an image of the electrode plate strip 20, and the second processing unit is configured to process the image to obtain the location of the tab.

The second detection mechanism 15 is arranged to detect the location of the tab of the electrode plate strip 20, and a location for cutting may be obtained based on the location of the tab of the electrode plate strip 20. In this way, the cutting mechanism 12 can cut the electrode plate strip 20 when the electrode plate strip 20 is in place, to improve accuracy of cutting the electrode plate strip 20 and increase a yield rate of the electrode plate.

In some embodiments, the second detection mechanism 15 includes a second laser transmitter 153 and a second laser receiver 154. The second laser transmitter 153 is configured to transmit laser light, and the second laser receiver 154 is configured to receive laser light. The second laser transmitter 153 and the second laser receiver 154 are respectively located on two sides of the electrode plate strip 20 along the thickness direction of the electrode plate strip 20. The second laser receiver 154 is configured to generate an in-place signal when no laser light transmitted by the second laser transmitter 153 is received, and the cutting mechanism 12 cuts the electrode plate strip 20 in response to the in-place signal.

The second laser transmitter 153 can transmit laser light, and the second laser receiver 154 can receive laser light. The second laser receiver 154 respectively generates different potentials in a case in which the second laser receiver 154 can receive laser light and in a case in which the second laser receiver 154 cannot receive laser light, and the location of the tab may be determined based on a potential change.

The second laser transmitter 153 and the second laser receiver 154 are spaced apart along the thickness direction, and the electrode plate strip 20 passes between the second laser transmitter 153 and the second laser receiver 154.

Along the width direction, the electrode plate strip 20 includes a first end with a tab and a second end without a tab. The second laser transmitter 153 and the second laser receiver 154 may be arranged at locations on the electrode plate strip 20 that are close to the first end.

During conveying of the electrode plate strip 20, a plurality of tabs of the electrode plate strip 20 sequentially pass through the second detection mechanism 15. Along the conveying direction, when the second detection mechanism 15 is located between two adjacent tabs, laser light transmitted by the second laser transmitter 153 can be received by the second laser receiver 154. However, when a tab blocks the second laser receiver 154, laser light transmitted by the second laser transmitter 153 cannot be received by the second laser receiver 154, the second laser receiver 154 generates an in-place signal, and the cutting mechanism 12 cuts the electrode plate strip 20.

In some embodiments, the first detection mechanism 13 further includes a first bracket 131 and a fifth mounting bracket 132, the first bracket 131 is connected to the rack 19 or the ground, and the fifth mounting bracket 132 is mounted on the first bracket 131. The fifth mounting bracket 132 includes a first mounting portion 1321, a second mounting portion 1322, and a third mounting portion 1323 that are sequentially connected. The first mounting portion 1321 and the third mounting portion 1323 are arranged opposite to each other. The first mounting portion 1321 is connected to the first bracket 131. One of the first laser transmitter 133 and the first laser receiver 134 is mounted on the first mounting portion 1321, and the other of the first laser transmitter 133 and the first laser receiver 134 is mounted on the third mounting portion 1323. The first bracket 131 and the fifth mounting bracket 132 are arranged to facilitate mounting of the first laser transmitter 133 and the first laser receiver 134.

In some embodiments, the second detection mechanism 15 further includes a second bracket 151 and a sixth mounting bracket 152, the second bracket 151 is connected to the rack 19 or the ground, and the sixth mounting bracket 152 is mounted on the second bracket 151. The sixth mounting bracket 152 includes a fourth mounting portion 1521, a fifth mounting portion 1522, and a sixth mounting portion 1523 that are sequentially connected. The fourth mounting portion 1521 and the sixth mounting portion 1523 are arranged opposite to each other. The fourth mounting portion 1521 is connected to the second bracket 151. One of the second laser transmitter 153 and the second laser receiver 154 is mounted on the fourth mounting portion 1521, and the other of the second laser transmitter 153 and the second laser receiver 154 is mounted on the sixth mounting portion 1523. The second bracket 151 and the sixth mounting bracket 152 are arranged to facilitate mounting of the second laser transmitter 153 and the second laser receiver 154.

Refer to FIG. 1 and FIG. 7. FIG. 7 is a schematic structural diagram of a roller 16 and a smoothing component 17 according to some embodiments of this application. In some embodiments, the electrode plate molding device 10 further includes the roller 16 and the smoothing component 17. The roller 16 and the smoothing component 17 are located upstream of the conveying mechanism 11 along the conveying direction. The roller 16 and the smoothing component 17 are located on two sides of the electrode plate strip 20 along the thickness direction of the electrode plate strip 20, and the smoothing component 17 is configured to smooth the electrode plate strip 20.

The roller 16 and the smoothing component 17 are arranged with a gap along the thickness direction, and the electrode plate strip 20 passes through the gap between the roller 16 and the smoothing component 17. The roller 16 and the smoothing component 17 respectively act on two sides of the electrode plate along the thickness direction, to smooth the electrode plate strip 20 before the electrode plate strip 20 passes through the conveying mechanism 11.

The roller 16 and the smoothing component 17 are arranged, so that the electrode plate strip 20 is smoothed by the smoothing component 17 when passing between the roller 16 and the smoothing component 17. This reduces a risk of folding or wrinkling of the electrode plate strip 20 during conveying.

In some embodiments, along the thickness direction, the smoothing component 17 has a first arc surface 171 facing the roller 16, and along the conveying direction, a gap between the first arc surface 171 and a peripheral surface of the roller 16 in the thickness direction gradually decreases.

The first arc surface 171 is a surface, facing the roller 16, of the smoothing component 17 along the thickness direction. The first arc surface 171 extends along an arc trajectory.

In some embodiments, the gap between the first arc surface 171 and the peripheral surface of the roller 16 in the thickness direction gradually decreases, so that the electrode plate strip 20 is gradually smoothed when passing between the smoothing component 17 and the roller 16.

The smoothing component 17 is provided with the first arc surface 171, so that good smoothing effect is achieved for the electrode plate strip 20, and a risk of scratching the electrode plate strip 20 is reduced. Along the conveying direction, the gap between the first arc surface 171 and the peripheral surface of the roller 16 in the thickness direction gradually decreases, so that the electrode plate strip 20 is gradually smoothed when passing between the smoothing component 17 and the roller 16, with better smoothing effect.

In some embodiments, the smoothing component 17 further has a third arc surface 174 facing the roller 16, and the third arc surface 174 is connected to the first arc surface 171. Along the conveying direction, a gap between the third arc surface 174 and the peripheral surface of the roller 16 in the thickness direction gradually increases. A location at which the third arc surface 174 is connected to the first arc surface 171 is on a plane determined by an axis of the roller 16 and a center of a circle of an arc corresponding to the first arc surface 171. Optionally, the third arc surface 174 and the first arc surface 171 are symmetrically arranged with respect to the plane.

In some embodiments, the roller 16 includes a roller body 161 and a rotating shaft 162, and the roller body 161 is connected to the rotating shaft 162. The electrode plate molding device 10 further includes two seventh mounting brackets 173 and a connecting rod 172. The two seventh mounting brackets 173 are spaced apart along the width direction, and are both fastened to the rotating shaft 162. The connecting rod 172 connects the two seventh mounting brackets 173, and the smoothing component 17 is mounted on the connecting rod 172.

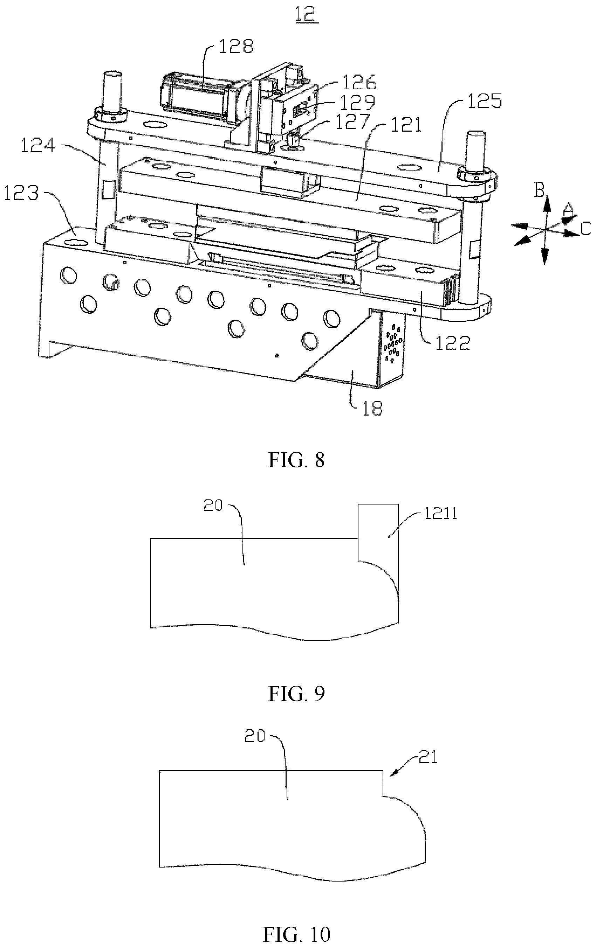

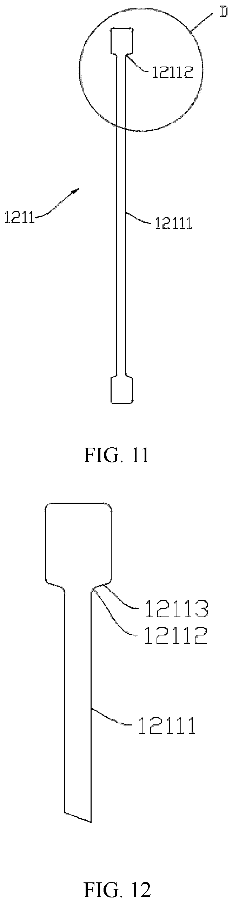

Refer to FIG. 1, FIG. 8, FIG. 9, FIG. 10, FIG. 11, and FIG. 12. FIG. 8 is a schematic structural diagram of a cutting mechanism 12 according to some embodiments of this application. FIG. 9 is a schematic diagram of cutting by a cutter 1211 when an electrode plate strip 20 deviates in the conventional technology. FIG. 10 shows an electrode plate strip 20 obtained through cutting by a cutter 1211 when an electrode plate strip 20 deviates in the conventional technology. FIG. 11 is a schematic structural diagram of a cutter 1211 according to some embodiments of this application. FIG. 12 is an enlarged view of a location D in FIG. 11. In some embodiments, the cutting mechanism 12 includes the cutter 1211 and a drive unit, and the drive unit is connected to the cutter 1211. The drive unit is configured to drive the cutter 1211 to move along the thickness direction of the electrode plate strip 20 to cut the electrode plate strip 20.

The cutter 1211 is a component for cutting the electrode plate strip 20. The drive unit is a component for driving the cutter 1211 to move along the thickness direction. The drive unit may include a linear drive component, for example, a linear air cylinder, a linear oil cylinder, or a linear electric cylinder. The drive unit may alternatively include a rotary drive component and a transmission mechanism. The rotary drive component outputs rotary movement, and the transmission mechanism converts the rotary movement into linear movement of the cutter 1211. The transmission mechanism may be a screw-nut mechanism, a crank link mechanism, or the like.

The drive unit can drive the cutter 1211 to move close to or away from the electrode plate strip 20, to cut the electrode plate strip 20. This is simple and convenient.

In some embodiments, the cutting mechanism 12 includes an eighth mounting bracket 123, two support rods 124, a mounting plate 125, an upper mold 121, and a lower mold 122. The eighth mounting bracket 123 is mounted on the rack 19 or the ground. The two support rods 124 are spaced apart on the eighth mounting bracket 123 along the width direction. The mounting plate 125 connects the two support rods 124 and is arranged opposite the eighth mounting bracket 123 along the thickness direction. The drive unit is mounted on the mounting plate 125. The drive unit is connected to the upper mold 121 to drive the upper mold 121 to move along the thickness direction. The lower mold 122 is mounted on the eighth mounting bracket 123 and is located between the two support rods 124. The upper mold 121 is located between the lower mold 122 and the mounting plate 125 along the thickness direction. The upper mold 121 is provided with the cutter 1211, and the lower mold 122 is provided with a groove matching a shape of the cutter 1211. The electrode plate strip 20 passes between the upper mold 121 and the lower mold 122. During cutting, the drive unit drives the upper mold 121 to move close to the lower mold 122, so that the cutter 1211 extends into the groove to cut the electrode plate strip 20.

In some embodiments, the drive unit includes a fixture block 126, a second connector 127, a fourth drive component 128, and a drive wheel 129. The fourth drive component 128 is mounted on the mounting plate 125. An output end of the fourth drive component 128 is connected to the drive wheel 129 to drive the drive wheel 129 to rotate. The drive wheel 129 is eccentrically provided with a movable block. The fixture block 126 is movably arranged on the mounting plate 125 along the thickness direction. The fixture block 126 is provided with a slot that extends along the conveying direction. The movable block is accommodated in the slot. One end of the second connector 127 is connected to the fixture block 126, and the other end is connected to the upper mold 121. When the fourth drive component 128 moves, the drive wheel 129 is driven to rotate. Because the movable block is eccentrically arranged, the movable block moves within the slot along the conveying direction, and the fixture block 126 is driven to move along the thickness direction, to drive, through transmission by the second connector 127, the upper mold 121 to move along the thickness direction, so that the upper mold 121 and the lower mold 122 cooperate to cut the electrode plate strip 20.

In some embodiments, the electrode plate molding device 10 further includes a waste collection box 18. The waste collection box 18 is arranged below the lower mold 122 along the thickness direction, and the waste collection box 18 is configured to collect waste formed through cutting.

In some embodiments, the cutter 1211 has a cutting surface, the cutting surface includes a first flat surface 12111 and a second arc surface 12112, the second arc surface 12112 is connected to an end of the first flat surface 12111 along the width direction. The second arc surface 12112 is used for forming a round corner on the electrode plate through cutting.

The cutting surface is a surface of a cutting edge of the cutter 1211.

The first flat surface 12111 is a main part of the cutting surface, and is mainly used for cutting the electrode plate strip 20.

The second arc surface 12112 is a part, used for forming a round corner on the electrode plate through cutting, of the cutting surface. The second arc surface 12112 is connected to an end of the first flat surface 12111 along the width direction.

The first flat surface 12111 is arranged to cut the electrode plate strip 20 to form the electrode plate. The second arc surface 12112 is arranged to form the round corner on the electrode plate through cutting. This reduces a risk that an edge or a corner pierces a separator during winding or stacking of electrode plates, and helps enhance safety of a battery cell.

Refer to FIG. 10 and FIG. 11. In the conventional technology, the cutter 1211 is provided with an arc surface with a central angle of 90°, to form a round corner on the electrode plate through cutting. However, when the electrode plate strip 20 deviates, the cutter 1211 in the conventional technology forms a step 21 on the electrode plate strip 20 or the electrode plate through cutting. A new sharp corner is formed at a location of the step 21, and also causes a risk of piercing the separator.

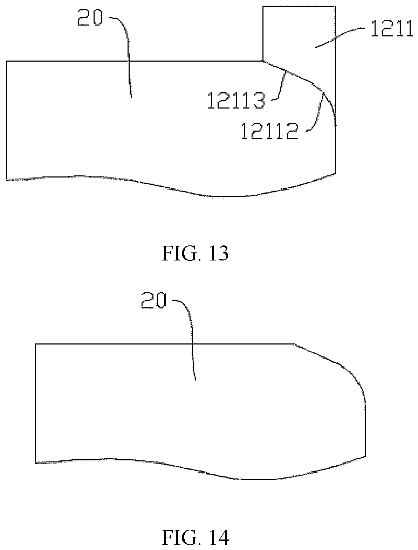

With respect to this, as shown in FIG. 11, FIG. 12, FIG. 13, and FIG. 14, in some embodiments, the cutting surface further includes a second flat surface 12113, and the second arc surface 12112 connects the first flat surface 12111 and the second flat surface 12113. The first flat surface 12111 and the second flat surface 12113 are arranged at an obtuse angle.

The first flat surface 12111 is connected to one end of the second arc surface 12112, and the second flat surface 12113 is connected to the other end of the second arc section.

A degree of a central angle corresponding to the second arc surface 12112 is less than 90°.

That "the first flat surface 12111 and the second flat surface 12113 are arranged at an obtuse angle" means that an included angle between the first flat surface 12111 and the second flat surface 12113 is an obtuse angle.

For the cutter 1211 provided in the embodiments of this application, when the electrode plate strip 20 deviates, the second flat surface 12113 of the cutter 1211 provided in the embodiments of this application acts on the electrode plate strip 20 or the electrode plate, to form an obtuse angle on the electrode plate strip 20 or the electrode plate through cutting, without forming the step 21 through cutting. Compared with the step 21, the obtuse angle has a lower risk of piercing the separator.

The second flat surface 12113 is arranged at an end, away from the first flat surface 12111, of the second arc surface 12112, and the second flat surface 12113 and the first flat surface 12111 are arranged at an obtuse angle, so that a specific deviation of the electrode plate strip 20 can be canceled, and an electrode plate obtained through cutting has no step 21 (if the step 21 appears, a new sharp corner is formed at an outer edge of the electrode plate, and is likely to pierce the separator). This helps increase a yield rate of the electrode plate.

In some embodiments, the second arc surface 12112 is tangent to the first flat surface 12111 and the second flat surface 12113.

The second arc surface 12112 is tangent to the first flat surface 12111 and the second flat surface 12113, so that an edge of an electrode plate obtained through cutting is smoother. This can further reduce a risk that the electrode plate pierces the separator, and helps increase a yield rate of the electrode plate and improve safety of a battery cell.

Refer to FIG. 11, FIG. 12, FIG. 13, and FIG. 14. The cutting surface includes two second arc surfaces 12112 and two second flat surfaces 12113. Along the width direction, the two second arc surfaces 12112 are respectively connected to two ends of the first flat surface 12111. One second flat surface 12113 is connected to the first flat surface 12111 through one second arc surface 12112.

The first flat surface 12111 is connected between the two second arc surfaces 12112. The second flat surfaces 12113 and the second arc surfaces 12112 are arranged in a one-to-one correspondence.

The second arc surfaces 12112 are respectively arranged at the two ends of the first flat surface 12111 along the width direction, and one second flat surface 12113 is correspondingly arranged for one second arc surface 12112, so that one round corner is formed at each of two ends of an electrode plate along the width direction during cutting of the electrode plate strip 20.

In some embodiments, the cutter 1211 includes two cutting surfaces, and the two cutting surfaces are located on two sides of the cutter 1211 along the conveying direction.

The two cutting surfaces respectively correspond to two surfaces of the cutting edge of the cutter 1211.

The cutting surfaces are formed on both sides of the cutter 1211, so that after the electrode plate strip 20 is cut, round corners can be formed on an electrode plate, and round corners are also formed on the electrode plate strip 20. In this way, for a next electrode plate obtained through cutting, round corners are formed at both ends of the electrode plate along the conveying direction.

According to some embodiments of this application, refer to FIG. 1 to FIG. 8.

An embodiment of this application provides an electrode plate molding device 10. The electrode plate molding device 10 includes a conveying mechanism 11, a cutting mechanism 12, a first detection mechanism 13, and a deviation rectification mechanism 14. The conveying mechanism 11 is configured to convey an electrode plate strip 20. The cutting mechanism 12 is arranged downstream of the conveying mechanism 11 along a conveying direction of the electrode plate strip 20, and the cutting mechanism 12 is configured to cut the electrode plate strip 20 to form an electrode plate. The first detection mechanism 13 is located upstream of the cutting mechanism 12 along the conveying direction, and the first detection mechanism 13 is configured to detect a location of the electrode plate strip 20 along a width direction. The deviation rectification mechanism 14 adjusts relative locations of the electrode plate strip 20 and the cutting mechanism 12 along the width direction in response to a detection result of the first detection mechanism 13. The conveying mechanism 11 can convey the electrode plate strip 20 to the cutting mechanism 12, and the cutting mechanism 12 can cut the electrode plate strip 20 to form the electrode plate. The electrode plate molding device 10 is provided with the first detection mechanism 13 and the deviation rectification mechanism 14. The first detection mechanism 13 can detect the location of the electrode plate strip 20 along the width direction to determine whether the electrode plate strip 20 deviates. When the electrode plate strip 20 deviates, the deviation rectification mechanism 14 can adjust the relative locations of the electrode plate strip 20 and the cutting mechanism 12 along the width direction, so that the cutting mechanism 12 can accurately cut the electrode plate strip 20 to increase a yield rate of the electrode plate.

The deviation rectification mechanism 14 is connected to the conveying mechanism 11, and the deviation rectification mechanism 14 is configured to adjust a location of the conveying mechanism 11 along the width direction to adjust the relative locations of the electrode plate strip 20 and the cutting mechanism 12 along the width direction. Because the conveying mechanism 11 can convey the electrode plate strip 20, when the location of the conveying mechanism 11 along the width direction is adjusted, the electrode plate strip 20 on the conveying mechanism 11 also moves along with the conveying mechanism 11. In this way, the location of the electrode plate strip 20 along the width direction is changed, and a deviation of the electrode plate strip 20 is rectified, so that the cutting mechanism 12 accurately cuts the electrode plate strip 20. This helps increase a yield rate of the electrode plate.

The first detection mechanism 13 includes a first laser transmitter 133 and a first laser receiver 134. The first laser transmitter 133 is configured to transmit laser light, and the first laser receiver 134 is configured to receive laser light. The first laser transmitter 133 and the first laser receiver 134 are respectively located on two sides of the electrode plate strip 20 along the thickness direction of the electrode plate strip 20. The first laser receiver 134 is configured to generate a deviation rectification signal when no laser light transmitted by the first laser transmitter 133 is received, and the deviation rectification mechanism 14 adjusts the relative locations of the electrode plate strip 20 and the cutting mechanism 12 along the width direction in response to the deviation rectification signal. When the electrode plate strip 20 does not deviate, the electrode plate strip 20 does not block the first laser receiver 134. In this case, laser light transmitted by the first laser transmitter 133 can be received by the first laser receiver 134. When the electrode plate strip 20 deviates, the electrode plate strip 20 blocks the first laser receiver 134. In this case, laser light transmitted by the first laser transmitter 133 cannot be received by the first laser receiver 134, the first laser receiver 134 generates a deviation rectification signal, and the deviation rectification mechanism 14 adjusts the relative locations of the electrode plate strip 20 and the cutting mechanism 12 along the width direction based on the deviation rectification signal to rectify the deviation.

The electrode plate molding device 10 further includes a second detection mechanism 15. The second detection mechanism 15 is located upstream of the cutting mechanism 12 along the conveying direction, and the second detection mechanism 15 is configured to detect a location of a tab of the electrode plate strip 20. The cutting mechanism 12 cuts the electrode plate strip 20 in response to a detection result of the second detection mechanism 15. The second detection mechanism 15 is arranged to detect the location of the tab of the electrode plate strip 20, and a location for cutting may be obtained based on the location of the tab of the electrode plate strip 20. In this way, the cutting mechanism 12 can cut the electrode plate strip 20 when the electrode plate strip 20 is in place, to improve accuracy of cutting the electrode plate strip 20 and increase a yield rate of the electrode plate.

The second detection mechanism 15 includes a second laser transmitter 153 and a second laser receiver 154. The second laser transmitter 153 is configured to transmit laser light, and the second laser receiver 154 is configured to receive laser light. The second laser transmitter 153 and the second laser receiver 154 are respectively located on two sides of the electrode plate strip 20 along the thickness direction of the electrode plate strip 20. The second laser receiver 154 is configured to generate an in-place signal when no laser light transmitted by the second laser transmitter 153 is received, and the cutting mechanism 12 cuts the electrode plate strip 20 in response to the in-place signal. During conveying of the electrode plate strip 20, a plurality of tabs of the electrode plate strip 20 sequentially pass through the second detection mechanism 15. Along the conveying direction, when the second detection mechanism 15 is located between two adjacent tabs, laser light transmitted by the second laser transmitter 153 can be received by the second laser receiver 154. However, when a tab blocks the second laser receiver 154, laser light transmitted by the second laser transmitter 153 cannot be received by the second laser receiver 154, the second laser receiver 154 generates an in-place signal, and the cutting mechanism 12 cuts the electrode plate strip 20.

The foregoing descriptions are merely example embodiments of this application, but not intended to limit this application. Persons skilled in the art may make various changes and variations to this application. Any modification, equivalent replacement, and improvement made without departing from the spirit and principle of this application shall fall within the protection scope of this application.

## Claims

1. An electrode plate molding device, comprising:
a conveying mechanism, configured to convey an electrode plate strip;
a cutting mechanism, wherein the cutting mechanism is arranged downstream of the conveying mechanism along a conveying direction of the electrode plate strip, and the cutting mechanism is configured to cut the electrode plate strip to form an electrode plate;
a first detection mechanism, wherein the first detection mechanism is located upstream of the cutting mechanism along the conveying direction, and the first detection mechanism is configured to detect a location of the electrode plate strip along a width direction of the electrode plate strip; and
a deviation rectification mechanism for adjusting relative locations of the electrode plate strip and the cutting mechanism along the width direction in response to a detection result of the first detection mechanism.

2. The electrode plate molding device according to claim 1, wherein the deviation rectification mechanism is connected to the conveying mechanism, and the deviation rectification mechanism is configured to adjust a location of the conveying mechanism along the width direction to adjust the relative locations of the electrode plate strip and the cutting mechanism along the width direction.

3. The electrode plate molding device according to claim 2, wherein the conveying mechanism comprises a driving roller and a first mounting bracket, the driving roller is rotatably connected to the first mounting bracket, and the driving roller is configured to convey the electrode plate strip; and
the deviation rectification mechanism comprises a first drive assembly and a second mounting bracket, the first mounting bracket is movably arranged on the second mounting bracket along the width direction, the first drive assembly is mounted on the second mounting bracket, the first drive assembly is connected to the first mounting bracket, and the first drive assembly is configured to drive the first mounting bracket to move relative to the second mounting bracket along the width direction.

4. The electrode plate molding device according to claim 3, wherein the conveying mechanism comprises a driven roller, the driven roller is rotatably connected to the first mounting bracket, the driven roller and the driving roller are respectively located on two sides along a thickness direction of the electrode plate strip, and the driven roller and the driving roller are configured to convey the electrode plate strip in cooperation.

5. The electrode plate molding device according to claim 4, wherein the conveying mechanism comprises a pressure adjustment mechanism, the pressure adjustment mechanism is connected to the driven roller, and the pressure adjustment mechanism is configured to adjust pressure applied by the driven roller to the electrode plate strip.

6. The electrode plate molding device according to claim 1, wherein the deviation rectification mechanism is connected to the cutting mechanism, and the deviation rectification mechanism is configured to adjust a location of the cutting mechanism along the width direction to adjust the relative locations of the electrode plate strip and the cutting mechanism along the width direction.

7. The electrode plate molding device according to claim 6, wherein the cutting mechanism comprises a cutting assembly and a third mounting bracket, and the cutting assembly is connected to the third mounting bracket; and
the deviation rectification mechanism comprises a second drive assembly and a second mounting bracket, the third mounting bracket is movably arranged on the second mounting bracket along the width direction, the second drive assembly is mounted on the second mounting bracket, the second drive assembly is connected to the third mounting bracket, and the second drive assembly is configured to drive the third mounting bracket to move relative to the second mounting bracket along the width direction.

8. The electrode plate molding device according to any one of claims 1 to 7, wherein the first detection mechanism comprises:
a first laser transmitter, configured to transmit laser light; and
a first laser receiver, configured to receive laser light, wherein the first laser transmitter and the first laser receiver are respectively located on two sides of the electrode plate strip along the thickness direction of the electrode plate strip, the first laser receiver is configured to generate a deviation rectification signal when no laser light transmitted by the first laser transmitter is received, and the deviation rectification mechanism adjusts the relative locations of the electrode plate strip and the cutting mechanism along the width direction in response to the deviation rectification signal.

9. The electrode plate molding device according to any one of claims 1 to 8, wherein the electrode plate molding device further comprises a second detection mechanism, the second detection mechanism is located upstream of the cutting mechanism along the conveying direction, and the second detection mechanism is configured to detect a location of a tab of the electrode plate strip; and
the cutting mechanism cuts the electrode plate strip in response to a detection result of the second detection mechanism.

10. The electrode plate molding device according to claim 9, wherein the second detection mechanism comprises:
a second laser transmitter, configured to transmit laser light; and
a second laser receiver, configured to receive laser light, wherein the second laser transmitter and the second laser receiver are respectively located on two sides of the electrode plate strip along the thickness direction of the electrode plate strip, the second laser receiver is configured to generate an in-place signal when no laser light transmitted by the second laser transmitter is received, and the cutting mechanism cuts the electrode plate strip in response to the in-place signal.

11. The electrode plate molding device according to any one of claims 1 to 10, wherein the electrode plate molding device further comprises a roller and a smoothing component, and the roller and the smoothing component are located upstream of the conveying mechanism along the conveying direction; and
the roller and the smoothing component are located on two sides of the electrode plate strip along the thickness direction of the electrode plate strip, and the smoothing component is configured to smooth the electrode plate strip.

12. The electrode plate molding device according to claim 11, wherein along the thickness direction, the smoothing component has a first arc surface facing the roller, and along the conveying direction, a gap between the first arc surface and a peripheral surface of the roller in the thickness direction gradually decreases.

13. The electrode plate molding device according to any one of claims 1 to 12, wherein the cutting mechanism comprises:
a cutter; and
a drive unit connected to the cutter, wherein the drive unit is configured to drive the cutter to move along the thickness direction of the electrode plate strip to cut the electrode plate strip.

14. The electrode plate molding device according to claim 13, wherein the cutter has a cutting surface, and the cutting surface comprises:
a first flat surface; and
a second arc surface connected to an end of the first flat surface along the width direction, wherein the second arc surface is used for forming a round corner on the electrode plate through cutting.

15. The electrode plate molding device according to claim 14, wherein the cutting surface further comprises a second flat surface, the second arc surface connects the first flat surface and the second flat surface, and the first flat surface and the second flat surface are arranged at an obtuse angle.

16. The electrode plate molding device according to claim 15, wherein the second arc surface is tangent to the first flat surface and the second flat surface.

17. The electrode plate molding device according to claim 15 or 16, wherein the cutting surface comprises two second arc surfaces and two second flat surfaces, the two second arc surfaces are respectively connected to two ends of the first flat surface along the width direction, and one second flat surface is connected to the first flat surface through one second arc surface.

18. The electrode plate molding device according to any one of claims 14 to 17, wherein the cutter comprises two cutting surfaces, and the two cutting surfaces are located on two sides of the cutter along the conveying direction.
